# EUROPEAN PATENT SPECIFICATION

(11) **EP 3 779 288 B1**
(45) Date of publication and mention of the grant of the patent: **14.02.2024**
(21) Application number: 18911774.0
(22) Date of filing: 28.12.2018
(51) Int. Cl.: F24F 1/0038, F24F 1/0063, F24F 12/00, F24F 13/22, F24F 1/0035, F24F 1/005, F24F 13/28, F24F 13/30, F24F 13/20

(54) **INDOOR UNIT OF AIR CONDITIONER**
INNENRAUMEINHEIT EINER KLIMAANLAGE
UNITÉ D'INTÉRIEUR DE CLIMATISEUR

(30) Priority: 30.03.2018 CN 201810276882
(43) Date of publication of application: 17.02.2021
(73) Proprietor: Gree Electric Appliances, Inc. of Zhuhai, Zhuhai, Guangdong 519070 (CN)
(72) Inventor: LAI, Xiaocheng, Zhuhai, Guangdong 519070 (CN); ZENG, Qinghe, Zhuhai, Guangdong 519070 (CN); ZENG, Hui, Zhuhai, Guangdong 519070 (CN); JIN, Haiyuan, Zhuhai, Guangdong 519070 (CN); CHEN, Shengwen, Zhuhai, Guangdong 519070 (CN); FU, Kaikai, Zhuhai, Guangdong 519070 (CN); LIN, Yuliang, Zhuhai, Guangdong 519070 (CN); JIA, Feifei, Zhuhai, Guangdong 519070 (CN); LIU, Heming, Zhuhai, Guangdong 519070 (CN); LIU, Shengbei, Zhuhai, Guangdong 519070 (CN); YANG, Chunxia, Zhuhai, Guangdong 519070 (CN); ZENG, Wenxuan, Zhuhai, Guangdong 519070 (CN); WANG, Chaoxin, Zhuhai, Guangdong 519070 (CN)
(74) Representative: Zacco GmbH
(86) International application number: PCT/CN2018/125024
(87) International publication number: WO 2019/184507

(56) References cited:
- WO-A1-2013/075722
- CN-A- 107 525 169
- CN-A- 107 525 169
- CN-U- 202 734 058
- CN-U- 202 734 058
- CN-U- 205 957 390
- DE-A1- 4 002 560

## Description

### Technical Field

The present invention relates to a field of household electrical appliances, and in particular to an air conditioner indoor unit.

### Background

In recent years, with a rapid development of economy and accelerating process of urbanization, an atmospheric pollution is becoming more and more serious. The increase of the PM2.5 concentration directly results in frequent occurrence of the hazy weather, makes the fog toxic and greatly increases the harmful substance, all of which pose a serious threat to the health of human beings. Under such a circumstance, a household comfortable air conditioner known to inventors cannot satisfy the requirement of people, and the health, comfort and environmental protection have become the development objectives of the modern air conditioner.

For the air conditioner known to inventors, in order to ensure the effect, an air conditioner room must be sealed necessarily. As a result, the dust, fog, bacteria, virus and waste gas in the room are unceasingly increased, the content of oxygen is continuously reduced, and the air quality becomes increasingly poor.

Recently, while the "air-conditioner disease" draws more and more attentions, people have been asked not to stay for a long time in the air-conditioner room; and it is required to open a window to charge fresh air or exhaust the indoor air to form a negative pressure, thus supplementing fresh air to the room in a manner of leaking from a gap on a door and the window to improve the indoor environment.

At present, there are mainly two ways for exchanging new and old air on the market:
I. The indoor air is exhausted out of the room by a single fan to form a negative pressure region in the room, thus forcing the outdoor fresh air to flow into the room from a gap of the room.
II. The outdoor fresh air is directly drawn to the room.

The above two ways have the problem of energy wastage due to a fact that direct drawing of the outdoor cold and hot air is bound to lead to a change of an indoor temperature, cause a large amount of energy wastage, increase the energy loss of the air conditioner and decrease the refrigerating and heating effect of the air conditioner. Particularly in winter, the entry of the outdoor cold air even leads to a condensation phenomenon of the air conditioner.

Additionally, the above two ways have the problem that polluted air enters the room without filtration; and in case of a severe hazy weather out of the room, directly drawing the outdoor air will lead to more serious pollution in the room.

An air conditioner indoor unit is disclosed in D1 (CN202734058U).

### Summary

The invention is defined by the appended claims.

Some embodiments of the present invention provide an air conditioner indoor unit, to solve the problem of poor air change effect of the air conditioner in the art known to inventors.

In particular, the invention provides an air conditioner indoor unit, which includes a main housing, and a fresh air device and a refrigerating-heating device that are disposed in the main housing; the refrigerating-heating device is provided with an air outlet side for air outgoing; the main housing is provided with a first accommodation cavity for accommodating the fresh air device and a second accommodation cavity for accommodating the refrigerating-heating device; the air conditioner indoor unit further includes: a guide assembly; and an air inlet of the guide assembly communicates with the fresh air device, and an air outlet of the guide assembly is located in the second accommodation cavity and located at the air outlet side of the refrigerating-heating device, such that fresh air flowing out from the fresh air device is guided by the guide assembly to the air outlet side of the refrigerating-heating device in the main housing.

According to the invention, the refrigerating-heating device includes an air duct assembly and an evaporator assembly disposed around the air duct assembly, and the air outlet of the guide assembly is located at a side of the air duct assembly away from the evaporator assembly, such that air flowing out from the air outlet of the guide assembly is directly blown to a room under an action of the air duct assembly.

In an exemplary embodiment, the fresh air device includes: a fresh air housing and a heat exchange core body, a fresh air passage and a dirty air passage are disposed in the fresh air housing, and a fresh air inlet and a fresh air outlet that communicate with the fresh air passage as well as a dirty air inlet and a dirty air outlet that communicate with the dirty air passage are disposed on the fresh air housing; the heat exchange core body is disposed in the fresh air housing, and the fresh air passage and the dirty air passage are communicated with the heat exchange core body, such that fresh air located in the fresh air passage and dirty air located in the dirty air passage exchange heat in the heat exchange core body; and the guide assembly communicates with the fresh air outlet, such that fresh air flowing out from the fresh air outlet flows to the air outlet side of the refrigerating-heating device by the guide assembly.

According to the invention, the main housing includes an air outlet panel, the air outlet panel corresponds to the air outlet side of the refrigerating-heating device, and the air outlet of the guide assembly is located inside the air outlet panel, such that fresh air flowing out from the guide assembly flows out from the air outlet panel by the air outlet side of the refrigerating-heating device.

In an exemplary embodiment, the air outlet of the guide assembly is located on a lower end of the air outlet side of the refrigerating-heating device, and the air outlet of the guide assembly is disposed towards an air outgoing direction of the refrigerating-heating device, such that a direction of fresh air blown out from the guide assembly is a same as the air outgoing direction of the refrigerating-heating device.

In an exemplary embodiment, the air outlet of the guide assembly is located on a lower end of an air inlet side of the refrigerating-heating device, and the air outlet of the guide assembly is disposed upwards, such that fresh air blown out from the air outlet of the guide assembly flows along a vertical direction.

In an exemplary embodiment, the fresh air outlet is provided on a top end of the fresh air housing, and the guide assembly is in abutting joint with the fresh air outlet, such that fresh air flowing out from the fresh air outlet is guided to the air outlet side of the refrigerating-heating device by the guide assembly.

In an exemplary embodiment, the air conditioner indoor unit further includes a drain pan, and the drain pan is located between the first accommodation cavity and the second accommodation cavity; and a guide hole is provided on the drain pan, and the guide assembly passes through the guide hole to guide fresh air from the fresh air device to the air outlet side of the refrigerating-heating device.

In an exemplary embodiment, the guide assembly is a pipe, one orifice of the pipe is in abutting joint with the fresh air outlet and the other orifice of the pipe is the air outlet of the guide assembly, and the air outlet of the guide assembly is disposed towards an air outgoing direction of the refrigerating-heating device.

In an exemplary embodiment, the air conditioner indoor unit further includes a filter device disposed at the air outlet of the guide assembly, and the filter device is configured to filter fresh air flowing out from the guide assembly.

In an exemplary embodiment, the guide assembly is a pipe, one orifice of the pipe is in abutting joint with the fresh air outlet of the fresh air device, and the other orifice of the pipe is the air outlet of the guide assembly or the air outlet of the guide assembly is provided on a wall of the pipe.

The air conditioner indoor unit applying the technical solutions of the present invention includes among others the main housing, and the fresh air device and the refrigerating-heating device that are disposed in the main housing, the main housing is provided with the first accommodation cavity for accommodating the fresh air device and the second accommodation cavity for accommodating the refrigerating-heating device, the second accommodation cavity is provided above the first accommodation cavity, and the refrigerating-heating device is provided with the air outlet side for air outgoing. In some embodiments of the present invention, by providing the guide assembly, fresh air flowing out from the fresh air device is guided to the air outlet side of the refrigerating-heating device, such that fresh air is blown to the room from the air outlet side of the refrigerating-heating device, and thus the problem of poor air change effect of the air conditioner in the art known to inventors is solved.

### Brief Description of the Drawings

The accompanying drawings illustrating the present invention are described here to provide a further understanding of the present invention. The schematic embodiments and description of the present invention are adopted to explain the present invention, and do not form improper limits to the present invention which is defined by the claims.

In the drawings:
Fig. 1 illustrates an overall front view of an embodiment of an air conditioner indoor unit according to the present invention.
Fig. 2 illustrates a side view of an internal structure of an air conditioner indoor unit according to the present invention.
Fig. 3 illustrates a rear view of an internal structure of an air conditioner indoor unit according to the present invention.
Fig. 4 illustrates a top view of an internal structure of an air conditioner indoor unit according to the present invention.
Fig. 5 illustrates a breakdown schematic diagram of an air conditioner indoor unit according to the present invention.

The drawings include the following reference signs:
10. main housing, 11. air outlet panel, 20. fresh air device, 30. fresh air housing, 31. fresh air passage, 311. fresh air inlet, 32. dirty air passage, 321. dirty air inlet, 322. dirty air outlet, 33. motor, 40. heat exchange core body, 50. guide assembly, 60. refrigerating-heating device, 61. air duct assembly, 62. evaporator assembly, 70. first accommodation cavity, 80. second accommodation cavity, and 90. drain pan.

### Detailed Description of the Embodiments

It is to be noted that the embodiments of the present invention and the characteristics of the embodiments can be combined with each other if there is no conflict. The present invention is described below in detail with reference to the accompanying drawings and in combination with the embodiments.

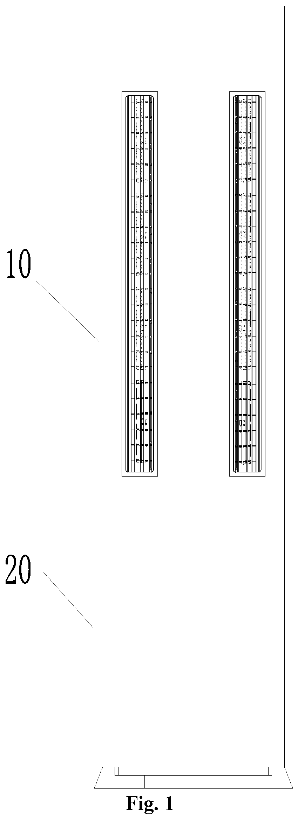

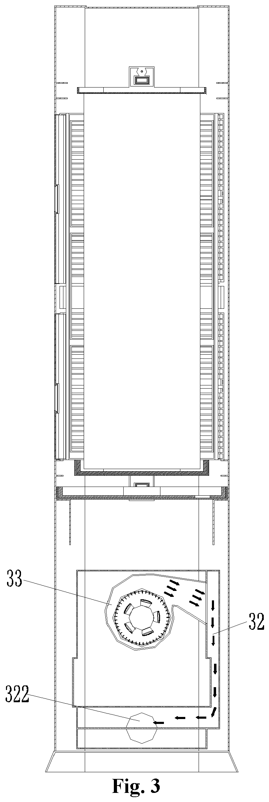

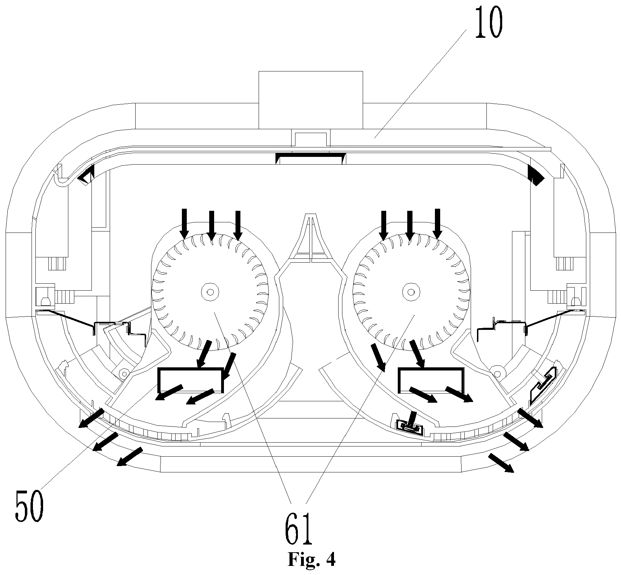

The present invention provides an air conditioner indoor unit. Referring to Fig. 1 to Fig. 5, the air conditioner indoor unit includes a main housing 10, and a fresh air device 20 and a refrigerating-heating device 60 that are disposed in the main housing 10; the refrigerating-heating device 60 is provided with an air outlet side for air outgoing; the main housing 10 is provided with a first accommodation cavity 70 for accommodating the fresh air device 20 and a second accommodation cavity 80 for accommodating the refrigerating-heating device; the air conditioner indoor unit further includes a guide assembly 50; and an air inlet of the guide assembly 50 communicates with the fresh air device 20, and an air outlet of the guide assembly 50 is located in the second accommodation cavity 80 and located at the air outlet side of the refrigerating-heating device 60, such that fresh air flowing out from the fresh air device 20 is guided by the guide assembly 50 to the air outlet side of the refrigerating-heating device 60 in the main housing.

The air conditioner indoor unit provided by some embodiments of the present invention includes the main housing 10, and the fresh air device 20 and the refrigerating-heating device 60 that are disposed in the main housing 10, the main housing 10 is provided with the first accommodation cavity 70 for accommodating the fresh air device 20 and the second accommodation cavity 80 for accommodating the refrigerating-heating device, the second accommodation cavity 80 is provided above the first accommodation cavity 70, and the refrigerating-heating device 60 is provided with the air outlet side for air outgoing. In the present invention by providing the guide assembly 50, fresh air flowing out from the fresh air device is guided to the air outlet side of the refrigerating-heating device, such that fresh air is blown to a room from the air outlet side of the refrigerating-heating device, and thus the problem of poor air change effect of the air conditioner in the art known to inventors is solved.

The refrigerating-heating device 60 includes an air duct assembly 61 and an evaporator assembly 62 disposed around the air duct assembly 61, and the air outlet of the guide assembly 50 is located at a side of the air duct assembly 61 away from the evaporator assembly 62, such that air flowing out from the air outlet of the guide assembly 50 is directly blown to a room under an action of the air duct assembly 61.

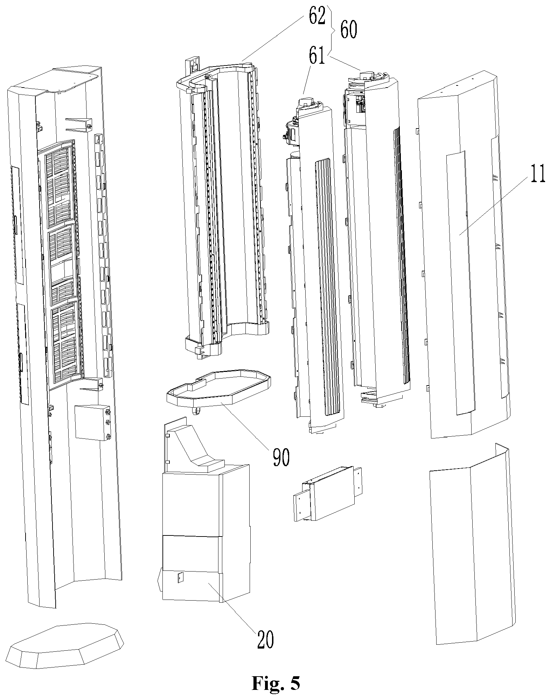

As shown in Fig. 5, in the present invention, the refrigerating-heating device 60 includes the air duct assembly 61 and the evaporator assembly 62 disposed around the air duct assembly 61, and the air outlet of the guide assembly 50 is located at the side of the air duct assembly 61 away from the evaporator assembly 62, i.e., the right side of the evaporator assembly 62 in Fig. 5, such that air flowing out from the air outlet of the guide assembly 50 is directly blown to the room under the action of the air duct assembly 61.

The fresh air device 20 includes a fresh air housing 30 and a heat exchange core body 40, a fresh air passage 31 and a dirty air passage 32 are arranged in the fresh air housing 30, and a fresh air inlet 311 and a fresh air outlet that communicate with the fresh air passage 31 as well as a dirty air inlet 321 and a dirty air outlet 322 that communicate with the dirty air passage 32 are disposed on the fresh air housing 30; the heat exchange core body 40 is disposed in the fresh air housing 30, and both the fresh air passage 31 and the dirty air passage 32 communicate with the heat exchange core body 40, such that fresh air located in the fresh air passage 31 and dirty air located in the dirty air passage 32 exchange heat in the heat exchange core body 40; and the guide assembly 50 communicates with the fresh air outlet, such that fresh air flowing out from the fresh air outlet flows to the air outlet side of the refrigerating-heating device 60 by the guide assembly 50.

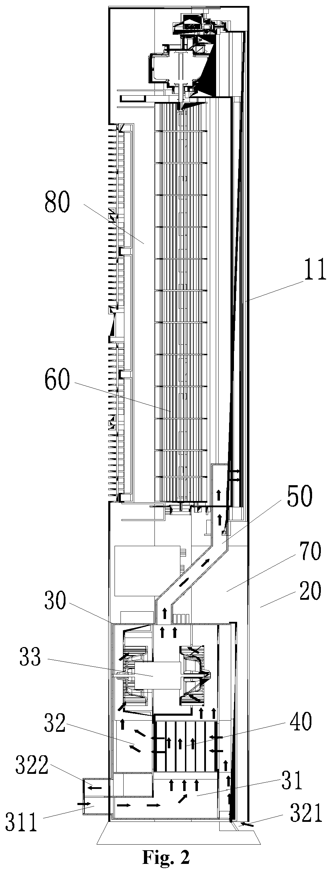

As shown in Fig. 2 to Fig. 3, the fresh air device 20 in the implementation manner is provided with the fresh air housing 30 and the heat exchange core body 40, the fresh air passage 31 and the dirty air passage 32 are disposed in the fresh air housing 30, and correspondingly, the fresh air housing 30 is provided with the fresh air inlet 311 and the fresh air outlet to communicate with the fresh air passage 31, and is further provided with the dirty air inlet 321 and the dirty air outlet 322 to communicate with the dirty air passage 32. The heat exchange core body 40 is disposed in the fresh air housing 30; and the heat exchange core body 40 implements the heat exchange between the fresh air and the dirty air by communicating with the fresh air passage 31 and the dirty air passage 32, thus improving the refrigerating and heating effect, and reducing a condition of indoor energy wastage due to the outflow of dirty air.

The main housing 10 includes an air outlet panel 11, the air outlet panel 11 corresponds to the air outlet side of the refrigerating-heating device 60, and the air outlet of the guide assembly 50 is located inside the air outlet panel 11, such that fresh air flowing out from the guide assembly 50 flows out from the air outlet panel 11 through the air outlet side of the refrigerating-heating device 60.

The main housing 10 includes the air outlet panel 11, the air outlet panel 11 corresponds to the air outlet side of the refrigerating-heating device 60, and the air outlet of the guide assembly 50 is located inside the air outlet panel 11, such that the fresh air flowing out from the guide assembly 50 is directly blown to the room under the action of the air duct assembly in the refrigerating-heating device.

In some embodiments, the air outlet of the guide assembly 50 is located on a lower end of the air outlet side of the refrigerating-heating device 60, and the air outlet of the guide assembly 50 is disposed towards the air outlet panel 11, such that a direction of the fresh air blown out from the guide assembly 50 is the same as an air outgoing direction of the refrigerating-heating device 60.

In a setting manner of the air outlet of the guide assembly 50 of the present invention, as shown in Fig. 2, the air outlet of the guide assembly 50 in some embodiments is located on the lower end of the air inlet side of the refrigerating-heating device 60, and the air outlet of the guide assembly 50 is disposed towards the air outlet panel 11, such that the direction of fresh air blown out from the guide assembly 50 is the same as the air outgoing direction of the refrigerating-heating device 60 to obtain a farther fresh air delivery distance.

The air outlet of the guide assembly 50 is located on a lower end of an air inlet side of the refrigerating-heating device 60, and the air outlet of the guide assembly 50 is disposed upwards, such that the fresh air blown out from the guide assembly 50 flows along a vertical direction.

In another setting manner of the air outlet of the guide assembly 50 of the present invention, the air outlet of the guide assembly 50 is located on the lower end of the air inlet side of the refrigerating-heating device 60, and the air outlet of the guide assembly 50 is disposed upwards, such that fresh air blown out from the air outlet of the guide assembly 50 is parallel to an extension surface of the air outlet panel for flowing and thus the fresh air is blown to the room under the action of the air duct assembly.

In some embodiments, the fresh air outlet is provided on a top end of the fresh air housing 30, and the guide assembly 50 is in abutting joint with the fresh air outlet, such that fresh air flowing out from the fresh air outlet is guided to the air outlet side of the refrigerating-heating device 60 by the guide assembly 50.

As shown in Fig. 2, the refrigerating-heating device of some embodiments of the present invention is disposed on the fresh air device. As a consequence, in order to facilitate the connection, the length and installation difficulty of the guide assembly are reduced as much as possible. In the embodiments, the fresh air outlet is provided on the top end of the fresh air housing 30, and the guide assembly 50 is in abutting joint with the fresh air outlet, such that fresh air flowing out from the fresh air outlet is directly blown to the guide assembly 50, and guided to the air outlet side of the refrigerating-heating device 60 by the guide assembly 50.

In some embodiments, the air conditioner indoor unit further includes a drain pan 90, and the drain pan 90 is located between the first accommodation cavity 70 and the second accommodation cavity 80; and a guide hole is provided on the drain pan 90, and the guide assembly 50 passes through the guide hole to guide fresh air from the fresh air device 20 to the air outlet side of the refrigerating-heating device 60.

As shown in Fig. 5, in order to connect the fresh air device and the refrigerating-heating device conveniently, the air conditioner indoor unit in the embodiment further includes the drain pan 90, and the drain pan 90 is located between the first accommodation cavity 70 and the second accommodation cavity 80; the guide hole is provided on the drain pan 90; one end of the guide assembly 50 is disposed in the first accommodation cavity, the other end of the guide assembly 50 is disposed in the second accommodation cavity and a middle of the guide assembly 50 passes through the guide hole of the drain pan; and the guide assembly 50 is configured to guide fresh air flowing out from the fresh air device in the first accommodation cavity to the refrigerating-heating device in the second accommodation cavity for heating and refrigerating.

In some embodiments, the guide assembly 50 uses a pipe, one orifice of the pipe is in abutting joint with the fresh air outlet and the other orifice of the pipe is the air outlet of the guide assembly 50, and the air outlet of the guide assembly 50 is disposed towards the air outlet panel 11, thus flowing fresh air to the room conveniently.

In some embodiments, a filter device is disposed at the air outlet of the guide assembly 50, and the filter device is configured to filter fresh air flowing out from the guide assembly 50.

In some embodiments, the guide assembly 50 is the pipe, one orifice of the pipe is in abutting joint with the fresh air outlet of the fresh air device, and the other orifice of the pipe is the air outlet of the guide assembly 50 or the air outlet of the guide assembly 50 is provided on a wall of the pipe.

Some embodiments of the present invention further provide an air conditioner, which includes an air conditioner indoor unit and an air conditioner outdoor unit connected with a pipeline of the air conditioner indoor unit; and the air conditioner indoor unit is the above-mentioned air conditioner indoor unit.

As main constituent parts of the air conditioner of some embodiments of the present invention, the upper part is a refrigerating and heating device, and the lower part is a fresh air device. An outdoor fresh air outlet is provided at an air duct system of the air conditioner, and an indoor dirty air inlet is provided on a bottom of a front surface of the air conditioner. The outdoor fresh air inlet and the indoor dirty air outlet are disposed on a rear lower end of the air conditioner.

The process that the outdoor fresh air enters the room is as follows: under the driving of rotation of a fresh air blade and an air duct motor 33 of the air conditioner, the outdoor fresh air passes through the outdoor fresh air inlet on the rear lower end of the air conditioner, enters a fresh air blade passage by a filter screen and a heat exchange core body, enters an air duct system of the complete machine by an air duct outlet of the air conditioner, and is exhausted by an air duct assembly of the air conditioner; and as a fresh air outlet is provided at the air duct outlet of the air conditioner, when the air conditioner is not in operation, fresh air can also be smoothly blown out from left and right air outlets of the air conditioner.

The process that the indoor dirty air is exhausted out of the room is as follows: under the driving of rotation of an air exhaust blade, the indoor air enters by the indoor dirty air inlet formed on a bottom end of a cabinet internal machine, passes through the filter screen, passes through the heat exchange core body, enters a dirty air passage formed behind the air exhaust blade, and reaches the dirty air outlet on the rear lower end of the cabinet internal machine, and thus the indoor dirty air is exhausted.

As can be seen from the above description, the above embodiments of the present invention implement the following technical effects:
(1) Some embodiments of the present invention solve a condition that when the outdoor fresh air is sucked to the room, the indoor energy wastage is caused and the indoor refrigerating and heating effect is poor.
(2) Some embodiments of the present invention solve the problem of exchange of the indoor and outdoor air to renew the outdoor air, and improve the air change effect of the air conditioner in the art known to inventors.
(3) Some embodiments of the present invention solve a condition that the outdoor air enters the room with short blowing; and in combination with the ordinary air conditioner and the total-heat exchange, fresh air is introduced to renew the indoor air, and the indoor dirty air is exhausted to improve the air quality; and the fresh air and the dirty air exchange energy by the heat exchange core body for energy recovery, thus reducing the energy wastage.

## Claims

1. An air conditioner indoor unit, comprising a main housing (10), and a fresh air device (20) and a refrigerating-heating device (60) that are disposed in the main housing (10), the refrigerating-heating device (60) being provided with an air outlet side for air outgoing, and the main housing (10) being provided with a first accommodation cavity (70) for accommodating the fresh air device (20) and a second accommodation cavity (80) for accommodating the refrigerating-heating device, wherein the air conditioner indoor unit further comprises:
a guide assembly (50), wherein an air inlet of the guide assembly (50) is in connection with the fresh air device (20) so as to let air into the guide assembly (50),
**characterized in that** an air outlet of the guide assembly (50) is located in the second accommodation cavity (80) and located at the air outlet side of the refrigerating-heating device (60), such that fresh air flowing out from the fresh air device (20) is guided by the guide assembly (50) to the air outlet side of the refrigerating-heating device (60) in the main housing;
wherein the refrigerating-heating device (60) comprises an air duct assembly (61) and an evaporator assembly (62) disposed around the air duct assembly (61), and the air outlet of the guide assembly (50) is located at a side of the air duct assembly (61) away from the evaporator assembly (62), such that air flowing out from the air outlet of the guide assembly (50) is directly blown to a room under an action of the air duct assembly (61);
wherein the main housing (10) comprises an air outlet panel (11), the air outlet panel (11) corresponds to the air outlet side of the refrigerating-heating device (60), and the air outlet of the guide assembly (50) is located inside the air outlet panel (11), such that fresh air flowing out from the guide assembly (50) flows out from the air outlet panel (11) by the air outlet side of the refrigerating-heating device (60).

2. The air conditioner indoor unit as claimed in claim 1, wherein the fresh air device (20) comprises:
a fresh air housing (30), a fresh air passage (31) and a dirty air passage (32) being disposed in the fresh air housing (30), and a fresh air inlet (311) and a fresh air outlet that communicate with the fresh air passage (31) as well as a dirty air inlet (321) and a dirty air outlet (322) that communicate with the dirty air passage (32) being disposed on the fresh air housing (30); and
a heat exchange core body (40), the heat exchange core body (40) being disposed in the fresh air housing (30), and the fresh air passage (31) and the dirty air passage (32) are communicated with the heat exchange core body (40), such that fresh air located in the fresh air passage (31) and dirty air located in the dirty air passage (32) exchange heat in the heat exchange core body (40);
wherein, the guide assembly (50) communicates with the fresh air outlet, such that fresh air flowing out from the fresh air outlet flows to the air outlet side of the refrigerating-heating device (60) by the guide assembly (50).

3. The air conditioner indoor unit as claimed in claim 1, wherein the air outlet of the guide assembly (50) is located on a lower end of the air outlet side of the refrigerating-heating device (60), and the air outlet of the guide assembly (50) is disposed towards an air outgoing direction of the refrigerating-heating device (60), such that a direction of fresh air blown out from the guide assembly (50) is a same as the air outgoing direction of the refrigerating-heating device (60).

4. The air conditioner indoor unit as claimed in claim 2, wherein the fresh air outlet is provided on a top end of the fresh air housing (30), and the guide assembly (50) is in abutting joint with the fresh air outlet, such that fresh air flowing out from the fresh air outlet is guided to the air outlet side of the refrigerating-heating device (60) by the guide assembly (50).

5. The air conditioner indoor unit as claimed in claim 1, wherein the air conditioner indoor unit further comprises a drain pan (90), and the drain pan (90) is located between the first accommodation cavity (70) and the second accommodation cavity (80); and a guide hole is provided on the drain pan (90), and the guide assembly (50) passes through the guide hole to guide fresh air from the fresh air device (20) to the air outlet side of the refrigerating-heating device (60).

6. The air conditioner indoor unit as claimed in claim 2, wherein the guide assembly (50) is a pipe, one orifice of the pipe is in abutting joint with the fresh air outlet and the other orifice of the pipe is the air outlet of the guide assembly (50), and the air outlet of the guide assembly (50) is disposed towards an air outgoing direction of the refrigerating-heating device (60).

7. The air conditioner indoor unit as claimed in any one of claims 1 to 6, wherein the air conditioner indoor unit further comprises a filter device disposed at the air outlet of the guide assembly (50), and the filter device is configured to filter fresh air flowing out from the guide assembly (50).

8. The air conditioner indoor unit as claimed in any one of claims 1 to 6, wherein the guide assembly (50) is a pipe, one orifice of the pipe is in abutting joint with the fresh air outlet of the fresh air device, and the other orifice of the pipe is the air outlet of the guide assembly (50) or the air outlet of the guide assembly (50) is provided on a wall of the pipe.

## Patentansprüche

1. Innenraumeinheit einer Klimaanlage, umfassend ein Hauptgehäuse (10) und eine Frischluftvorrichtung (20) und eine Kühl-Heiz-Vorrichtung (60), die in dem Hauptgehäuse (10) angeordnet sind, wobei die Kühl-Heiz-Vorrichtung (60) mit einer Luftauslassseite für den Luftaustritt bereitgestellt ist und das Hauptgehäuse (10) mit einem ersten Aufnahmehohlraum (70) zum Aufnehmen der Frischluftvorrichtung (20) und einem zweiten Aufnahmehohlraum (80) zum Aufnehmen der Kühl-Heiz-Vorrichtung bereitgestellt ist, wobei die Innenraumeinheit der Klimaanlage ferner Folgendes umfasst:
eine Führungsanordnung (50), wobei ein Lufteinlass der Führungsanordnung (50) in Verbindung mit der Frischluftvorrichtung (20) steht, sodass Luft in die Führungsanordnung (50) eingelassen wird,
**dadurch gekennzeichnet, dass** sich ein Luftauslass der Führungsanordnung (50) in dem zweiten Aufnahmehohlraum (80) und an der Luftauslassseite der Kühl-Heiz-Vorrichtung (60) befindet, sodass die aus der Frischluftvorrichtung (20) ausströmende Frischluft durch die Führungsanordnung (50) zu der Luftauslassseite der Kühl-Heiz-Vorrichtung (60) in dem Hauptgehäuse geleitet wird;
wobei die Kühl-Heiz-Vorrichtung (60) eine Luftführungsanordnung (61) und eine um die Luftführungsanordnung (61) herum angeordnete Verdampferanordnung (62) umfasst und sich der Luftauslass der Führungsanordnung (50) an einer von der Verdampferanordnung (62) entfernten Seite der Luftführungsanordnung (61) befindet, sodass die aus dem Luftauslass der Führungsanordnung (50) ausströmende Luft unter der Wirkung der Luftführungsanordnung (61) direkt in einen Raum geblasen wird;
wobei das Hauptgehäuse (10) eine Luftauslassplatte (11) umfasst, die Luftauslassplatte (11) der Luftauslassseite der Kühl-Heiz-Vorrichtung (60) entspricht und sich der Luftauslass der Führungsanordnung (50) innerhalb der Luftauslassplatte (11) befindet, sodass aus der Führungsanordnung (50) ausströmende Frischluft aus der Luftauslassplatte (11) an der Luftauslassseite der Kühl-Heiz-Vorrichtung (60) ausströmt.

2. Innenraumeinheit einer Klimaanlage nach Anspruch 1, wobei die Frischluftvorrichtung (20) Folgendes umfasst:
ein Frischluftgehäuse (30), einen Frischluftkanal (31) und einen Schmutzluftkanal (32), die in dem Frischluftgehäuse (30) angeordnet sind, und einen Frischlufteinlass (311) und einen Frischluftauslass, die mit dem Frischluftkanal (31) in Verbindung stehen, sowie einen Schmutzlufteinlass (321) und einen Schmutzluftauslass (322), die mit dem Schmutzluftkanal (32) in Verbindung stehen, der an dem Frischluftgehäuse (30) angeordnet ist; und
einen Wärmetauscherkernkörper (40), wobei der Wärmetauscherkernkörper (40) in dem Frischluftgehäuse (30) angeordnet ist und der Frischluftkanal (31) und der Schmutzluftkanal (32) mit dem Wärmetauscherkernkörper (40) in Verbindung stehen, sodass in dem Frischluftkanal (31) befindliche Frischluft und in dem Schmutzluftkanal (32) befindliche Schmutzluft Wärme in dem Wärmetauscherkernkörper (40) austauschen;
wobei die Führungsanordnung (50) mit dem Frischluftauslass in Verbindung steht, sodass aus dem Frischluftauslass strömende Frischluft zu der Luftauslassseite der Kühl-Heiz-Vorrichtung (60) durch die Führungsanordnung (50) strömt.

3. Innenraumeinheit einer Klimaanlage nach Anspruch 1, wobei sich der Luftauslass der Führungsanordnung (50) an einem unteren Ende der Luftauslassseite der Kühl-Heiz-Vorrichtung (60) befindet und der Luftauslass der Führungsanordnung (50) in Richtung einer Luftaustrittsrichtung der Kühl-Heiz-Vorrichtung (60) angeordnet ist, sodass eine Richtung der aus der Führungsanordnung (50) ausgeblasenen Frischluft mit der Luftaustrittsrichtung der Kühl-Heiz-Vorrichtung (60) übereinstimmt.

4. Innenraumeinheit einer Klimaanlage nach Anspruch 2, wobei der Frischluftauslass an einem oberen Ende des Frischluftgehäuses (30) bereitgestellt ist und die Führungsanordnung (50) an dem Frischluftauslass anliegt, sodass aus dem Frischluftauslass ausströmende Frischluft durch die Führungsanordnung (50) zu der Luftauslassseite der Kühl-Heiz-Vorrichtung (60) geführt wird.

5. Innenraumeinheit einer Klimaanlage nach Anspruch 1, wobei die Innenraumeinheit der Klimaanlage ferner eine Ablaufwanne (90) umfasst und sich die Ablaufwanne (90) zwischen dem ersten Aufnahmehohlraum (70) und dem zweiten Aufnahmehohlraum (80) befindet; und ein Führungsloch an der Ablaufwanne (90) bereitgestellt ist, und die Führungsanordnung (50) durch das Führungsloch hindurchgeht, um Frischluft von der Frischluftvorrichtung (20) zu der Luftauslassseite der Kühl-Heiz-Vorrichtung (60) zu führen.

6. Innenraumeinheit einer Klimaanlage nach Anspruch 2, wobei die Führungsanordnung (50) ein Rohr ist, eine Öffnung des Rohrs an dem Frischluftauslass anliegt und die andere Öffnung des Rohrs der Luftauslass der Führungsanordnung (50) ist, und der Luftauslass der Führungsanordnung (50) in Richtung einer Luftaustrittsrichtung der Kühl-Heiz-Vorrichtung (60) angeordnet ist.

7. Innenraumeinheit einer Klimaanlage nach einem der Ansprüche 1 bis 6, wobei die Innenraumeinheit der Klimaanlage ferner eine Filtervorrichtung umfasst, die an dem Luftauslass der Führungsanordnung (50) angeordnet ist, und die Filtervorrichtung konfiguriert ist, um aus der Führungsanordnung (50) ausströmende Frischluft zu filtern.

8. Innenraumeinheit einer Klimaanlage nach einem der Ansprüche 1 bis 6, wobei die Führungsanordnung (50) ein Rohr ist, eine Öffnung des Rohrs an dem Frischluftauslass der Frischluftvorrichtung anliegt und die andere Öffnung des Rohrs der Luftauslass der Führungsanordnung (50) ist oder der Luftauslass der Führungsanordnung (50) an einer Wand des Rohrs bereitgestellt ist.

## Revendications

1. Unité d'intérieur de climatiseur, comprenant un boîtier principal (10), un dispositif d'air frais (20) et un dispositif de réfrigération-chauffage (60) qui sont disposés dans le boîtier principal (10), le dispositif de réfrigération-chauffage (60) étant pourvu d'un côté de sortie d'air pour l'air sortant, et le boîtier principal (10) étant pourvu d'une première cavité de logement (70) pour loger le dispositif d'air frais (20) et d'une seconde cavité de logement (80) pour loger le dispositif de réfrigération-chauffage, dans lequel l'unité d'intérieur de climatiseur comprend en outre :
un ensemble de guidage (50), dans laquelle une entrée d'air de l'ensemble de guidage (50) est en connexion avec le dispositif d'air frais (20) de manière à laisser entrer l'air dans l'ensemble de guidage (50),
**caractérisée en ce qu'**une sortie d'air de l'ensemble de guidage (50) est située dans la seconde cavité de logement (80) et située du côté sortie d'air du dispositif de réfrigération-chauffage (60), de sorte que l'air frais s'écoulant du dispositif d'air frais (20) est guidé par l'ensemble de guidage (50) vers le côté sortie d'air du dispositif de réfrigération-chauffage (60) dans le boîtier principal ;
dans lequel le dispositif de réfrigération-chauffage (60) comprend un ensemble conduit d'air (61) et un ensemble évaporateur (62) disposé autour de l'ensemble conduit d'air (61), et la sortie d'air de l'ensemble de guidage (50) est située sur un côté de l'ensemble conduit d'air (61) à l'écart de l'ensemble évaporateur (62), de sorte que l'air s'écoulant de la sortie d'air de l'ensemble de guidage (50) est directement soufflé vers une pièce sous l'action de l'ensemble conduit d'air (61) ;
dans lequel le boîtier principal (10) comprend un panneau de sortie d'air (11), le panneau de sortie d'air (11) correspond au côté sortie d'air du dispositif de réfrigération-chauffage (60), et la sortie d'air de l'ensemble de guidage (50) est située à l'intérieur du panneau de sortie d'air (11), de sorte que l'air frais s'écoulant de l'ensemble de guidage (50) s'écoule du panneau de sortie d'air (11) par le côté sortie d'air du dispositif de réfrigération-chauffage (60).

2. Unité d'intérieur de climatiseur selon la revendication 1, dans laquelle le dispositif d'air frais (20) comprend :
un boîtier d'air frais (30), un passage d'air frais (31) et un passage d'air sale (32) étant disposés dans le boîtier d'air frais (30), et une entrée d'air frais (311) et une sortie d'air frais qui communiquent avec le passage d'air frais (31) ainsi qu'une entrée d'air sale (321) et une sortie d'air sale (322) qui communiquent avec le passage d'air sale (32) étant disposées sur le boîtier d'air frais (30) ; et
un corps principal d'échange de chaleur (40), le corps principal d'échange de chaleur (40) étant disposé dans le boîtier d'air frais (30), et le passage d'air frais (31) et le passage d'air sale (32) communiquent avec le corps principal d'échange de chaleur (40), de sorte que l'air frais situé dans le passage d'air frais (31) et l'air sale situé dans le passage d'air sale (32) échangent de la chaleur dans le corps principal d'échange de chaleur (40) ;
dans lequel l'ensemble de guidage (50) communique avec la sortie d'air frais, de sorte que l'air frais s'écoulant de la sortie d'air frais s'écoule vers le côté sortie d'air du dispositif de réfrigération-chauffage (60) par l'ensemble de guidage (50).

3. Unité d'intérieur de climatiseur selon la revendication 1, dans laquelle la sortie d'air de l'ensemble de guidage (50) est située sur une extrémité inférieure du côté sortie d'air du dispositif de réfrigération-chauffage (60), et la sortie d'air de l'ensemble de guidage (50) est disposée vers une direction de sortie d'air du dispositif de réfrigération-chauffage (60), de sorte qu'une direction d'air frais soufflé hors de l'ensemble de guidage (50) est la même que la direction de sortie d'air du dispositif de réfrigération-chauffage (60).

4. Unité d'intérieur de climatiseur selon la revendication 2, dans laquelle la sortie d'air frais est prévue sur une extrémité supérieure du boîtier d'air frais (30), et l'ensemble de guidage (50) vient en butée avec la sortie d'air frais, de sorte que l'air frais s'écoulant de la sortie d'air frais est guidé vers le côté sortie d'air du dispositif de réfrigération-chauffage (60) par l'ensemble de guidage (50).

5. Unité d'intérieur de climatiseur selon la revendication 1, dans laquelle l'unité d'intérieur de climatiseur comprend en outre un bac de récupération (90), et le bac de récupération (90) est situé entre la première cavité de logement (70) et la seconde cavité de logement (80) ; et un trou de guidage est prévu sur le bac de récupération (90), et l'ensemble de guidage (50) passe à travers le trou de guidage pour guider l'air frais du dispositif d'air frais (20) vers le côté sortie d'air du dispositif de réfrigération-chauffage (60).

6. Unité d'intérieur de climatiseur selon la revendication 2, dans laquelle l'ensemble de guidage (50) est un tuyau, un orifice du tuyau vient en butée avec la sortie d'air frais et l'autre orifice du tuyau est la sortie d'air de l'ensemble de guidage (50), et la sortie d'air de l'ensemble de guidage (50) est disposée vers une direction de sortie d'air du dispositif de réfrigération-chauffage (60).

7. Unité d'intérieur de climatiseur selon l'une quelconque des revendications 1 à 6, dans laquelle l'unité d'intérieur de climatiseur comprend en outre un dispositif de filtre disposé au niveau de la sortie d'air de l'ensemble de guidage (50), et le dispositif de filtre est configuré pour filtrer l'air frais s'écoulant de l'ensemble de guidage (50).

8. Unité d'intérieur de climatiseur selon l'une quelconque des revendications 1 à 6, dans laquelle
l'ensemble de guidage (50) est un tuyau, un orifice du tuyau vient en butée avec la sortie d'air frais du dispositif d'air frais, et l'autre orifice du tuyau est la sortie d'air de l'ensemble de guidage (50) ou la sortie d'air de l'ensemble de guidage (50) est prévue sur une paroi du tuyau.
